# EUROPÄISCHE PATENTANMELDUNG

(11) **EP 3 505 283 A1**
(43) Veröffentlichungstag der Anmeldung: **03.07.2019**
(21) Anmeldenummer: 18000767.6
(22) Anmeldetag: 27.09.2018
(51) Int. Cl.: B23B 51/04, B23B 31/11

(54) **WERKZEUGAUFNAHME**

(30) Priorität: 27.09.2017 CH 11802017
(71) Anmelder: Zermec Engineering GmbH, 5080 Laufenburg (CH)
(72) Erfinder: Knecht, Michael, 5080 Laufenburg (CH)
(74) Vertreter: Alder, Hans Rudi

(57) **Zusammenfassung**

Eine Werkzeugaufnahme mit einer Verbindungsanordnung (7) zur raschen und sicheren Montage/Demontage einer Bohrkrone (4). Die Verbindungsanordnung (7) weist mindestens ein Verbindungselement (10, 16, 21, 23, 27) mit mindestens einem mehrgängigen und konisch zusammenlaufenden Innen- (18) undloder Aussengewinde (19) auf, welches mit einem anderen Verbindungselement (10, 16, 21, 23, 27) mit passendem Gegengewinde zusammenwirkt. Die zusammenwirkenden Verbindungselemente bilden eine mehrgängige und konisch zusammenlaufende Schraubverbindung.

## Beschreibung

Die vorliegende Erfindung betrifft eine Werkzeugaufnahme mit einer Verbindungsanordnung zur schnellen und sicheren Montage/Demontage einer Bohrkrone gemäss Oberbegriff des Anspruchs 1.

Bohrkronen finden ihre Verwendung in Verbindung mit einer Antriebseinheit, insbesondere eine Bohrmaschine, zum Bohren von Löchern mit grösserem Durchmesser, vorzugsweise bei der Bearbeitung von Gestein, Beton, Mauerwerk oder anderen harten Materialien. Diese Bohrkronen umfassen in der Regel ein metallisches Zylinderrohr, welches stimseitig eine Vielzahl von Schneidkörpern aufweist und antriebsseitig mit einem Bohrkronenboden versehen ist, an welchem eine als Verbindungselement für eine Werkzeugaufnahmeverbindung gestaltete Drehmitnahme vorgesehen ist, um die Bohrkrone mit einer Antriebseinheit zu verbinden. Werkzeugaufnahmen, wie Bohrfutter u.a. sind für die auswechselbare Befestigung von Bohrern mit der Bohrmaschine hinlänglich bekannt. Bei Bohrkronen besteht das Verbindungselement zur Werkzeugaufnahme in der Regel aus einem als Sechskant ausgebildetes und auf dem Bohrkronenboden befestigtes Aufnahme-Endstück mit einem Innengewinde, wie dies bspw. aus der US2008/0296069 ersichtlich ist. Es versteht sich, dass dieses Verbindungselement auch aus einem im Bohrkronenboden eingearbeiteten Bohrkronenbodenloch mit Innengewinde, aus einem auf den Bohrkronenboden aufgesetzten Gewindekopf mit Aussengewinde oder aus einem aufgeschraubten Kupplungsstück für einen Bajonettverschluss, etc. bestehen kann.

Solche Bohrkronen sind hinlänglich bekannt und weisen unterschiedliche Verbindungssysteme für die Bildung einer Werkzeugaufnahmeverbindung, d.h. einer Verbindung der Bohrkrone mit einer Antriebseinheit auf. So zeigen die EP-1'319'455 und EP-2'633'931 einfache Steckverbindungen, welche sich beim Arbeiten im Feld nicht bewähren, insbesondere weil sich deren Drehmitnehmer rasch ausschlagen und die erforderlichen Drehkräfte längerfristig nicht mehr übertragen. Genügend drehsicher und robust erweisen sich jedoch Schraubverbindungen. Bei diesen Schraubverbindungen lassen sich besonders ausgebildete und verstärkende Bohrhalter mit der Bohrkrone verschrauben. Dies führt zu stabilen Aufnahmeverbindungen, welche die erhöhten Dreh- und Axialkräfte stabil übertragen, jedoch sind auch diese Aufnahmeverbindungen nach intensivem Gebrauch nicht in einfacher Weise wieder lösbar.

Es ist deshalb auch schon vorgeschlagen worden, die Schraubverbindung mit einem Bajonettverschluss zu koppeln, wie bspw. in der EP-0'235'581 oder DE-38'14'365 beschrieben. Leider schlägt der Bajonettverschluss bei dieser Ausgestaltung wegen der erhöhten Axialkräfte rasch aus und muss deshalb nicht nur die Bohrkrone, sondern auch das Gegenstück des Bajonettverschlusses ausgewechselt werden, was sich als zeitraubend und kostspielig erweist.

Leider führen die hohen Drehmomente und Axialkräfte, wie sie bei der Bearbeitung von hartem und inhomogenem Material erforderlich sind, bei allen diesen bekannten Bohrkronen zu einem raschen Verschleiss, was ein mehrfaches Auswechseln derselben erforderlich macht. Darüber hinaus sind die oft besonders verstärkten Verbindungselemente und Aufnahmeverbindungen schwergewichtig, d.h. erfordern eine erhöhte Energie für die Rotation und Axialbewegung der Bohrkrone, was wiederum zu einem erhöhten Verschleiss derselben führt. Insbesondere müssen die Bohrkronen bei einem Arbeitsgang sehr oft vom Aufnahme-Endstück, resp. dem Bohrerhalter getrennt werden, was zu mühsamen und zeitintensiven Zusatzarbeiten führt, insbesondere weil sich die einzelnen Verbindungselemente der Werkzeug-Aufnahmeverbindung unter den erhöhten Vibrationskräften, insbesondere unstetigen Quer-, Rotations- und Axialkräften ineinander verkeilen und verklemmen. Darüber hinaus kann sich auch die Bohrkrone im zu bearbeitenden Material verklemmen und macht ein Lösen derselben von der Antriebseinheit erforderlich. Für das Lösen der Werkzeug-Aufnahmeverbindung sind meist besondere Montagewerkzeuge, bspw. ein zum Aufnahme-Endstück passender Sechskant erforderlich. Dieser Lösevorgang erweist sich nicht nur als kraftrauben, weil die Reibkräfte der verklemmten Gewinde zu überwinden sind, sondern auch als äusserst zeitintensiv, weil diese Gewinde sehr lang sind, d.h. einen langen Löseweg aufweisen.

Es sind deshalb bspw. mit der EP-1'384'540 auch schon Werkzeugaufnahmen mit flanschartige Elementen vorgeschlagen worden, welche mit Hilfe von Klemmkeilvorrichtungen werkzeugfrei gelöst werden können. Leider erweist sich der Aufbau dieser Klemmkeilvorrichtung als mechanisch zu diffizil, d.h. nicht genügend robust und eignet sich im Betrieb mit starken Vibrationskräften und einem staubigen und nassen Umfeld.

Es ist deshalb die Aufgabe der vorliegenden Erfindung, die Nachteile der Werkzeug-Aufnahmeverbindungen bekannter Art zu überwinden und insbesondere das Lösen derselben zu vereinfachen, um ein rasches und problemloses Auswechseln der Bohrkrone und/oder ein Einsetzen eines Fangstücks und/oder eines Verlängerungsstücks zu ermöglichen, d.h. eine langlebige, schnell und leicht lösbare Werkzeug-Aufnahmeverbindung mit einer Schraubverbindungsanordnung zur schnellen Montage/Demontage einer Bohrkrone und/oder anderer Verbindungsstücke zu schaffen.

Diese Aufgabe wird erfindungsgemäss mit einer Werkzeugaufnahme, welche die Merkmale des vorliegenden Anspruchs 1 aufweist, gelöst. Insbesondere umfasst diese Werkzeugaufnahme eine Verbindungsanordnung mit mindestens einem Verbindungselement, welches mindestens ein mehrgängiges und konisch zusammenlaufendes Innen- und/oder Aussengewinde aufweist und welches mit einem weiteren Verbindungselement mit passendem Gegengewinde zusammenwirkt um eine mehrgängige und konisch zusammenlaufende Schraubverbindung zu bilden.

In einer bevorzugten Ausführungsform weisen die Verbindungselemente der Verbindungsanordnung mehrgängige und konisch zusammenlaufende Gewinde mit einer Gewindesteigung von einem Vielfachen eines einfachen UNC-Gewindes auf. Insbesondere ist in einer bevorzugten Ausführungsform die Schraubverbindung vier-gängig ausgebildet, d.h. weist die Schraubverbindung eine Gewindesteigung von bspw. 4 x 2.309 mm pro Umdrehung, d.h. 9.236 mm, oder von bspw. 4 x 3.175 mm, d.h. 12.7 mm, auf.

In einer weiteren Ausführungsform weist das mehrgängige und konisch zusammenlaufende Gewinde einen Konuswinkel von mehr als 1° auf, insbesondere einen solchen von 1° bis 10° und vorzugsweise einen solchen von 5°.

In einer speziellen Ausführungsform ist das Verbindungselement als Aufnahme-Endstück der Bohrkrone ausgebildet und ist mit der Bohrkrone stoffschlüssig verbunden, d.h. verschweisst oder verlötet ist.

Weitere bevorzugte Ausführungsformen weisen die Merkmale der abhängigen Ansprüche auf.

Im Folgenden soll die Erfindung anhand der Figuren näher erläutert werden. Dabei zeigt:
- Fig. 1:: schematische Darstellung einer Bohrkrone bekannter Art mit einem Antriebseinheit;
- Fig. 2:: schematische Darstellung einer Verbindungsanordnung zwischen einer Bohrkrone und der Antriebswelle einer Antriebseinheit;
- Fig. 3:: schematische Darstellung einer Bohrkrone mit einem erfindungsgemässen Einschraub-Adapter:
- Fig. 4:: schematische Darstellung eines Adapters für eine erfindungsgemässe Verbindungsanordnung;
- Fig. 5:: schematische Darstellung eines Zwischenstücks für eine erfindungsgemässe Verbindungsanordnung;
- Fig. 6:: schematische Darstellung eines Verlängerungsstücks für eine erfindungsgemässe Verbindungsanordnung;
- Fig. 7:: schematische Darstellung einer Drehmitnahme für eine erfindungsgemässe Verbindungsanordnung;
- Fig. 8:: schematische Darstellung einer Zusammenstellung von Verbindungsteilen für eine erfindungsgemässe Verbindungsanordnung.

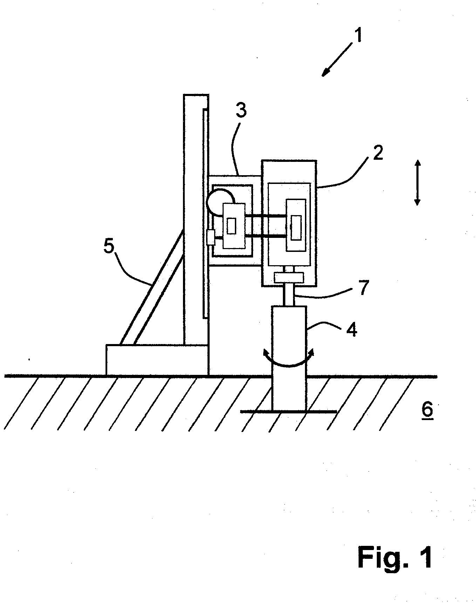

Fig. 1 zeigt eine bevorzugte Verwendung einer konventionellen Bohrkrone 4 in einem Kernbohrsystem 1, wie es aus der EP-3'088'150 bekannt ist. Dieses umfasst im Wesentlichen eine Antriebseinheit 2, eine Vorschubeinrichtung 3, ein Bohrwerkzeug, insbesondere eine Bohrkrone 4 und einen Maschinenständer 5, welcher erlaubt, die Bohrkrone 4 kontrolliert in den zu bearbeitenden Werkstoff 6 einzuführen. Eine Verbindungsanordnung gewährleistet die Kraftübertragung zwischen der Antriebseinheit 2 und der Bohrkrone 4.

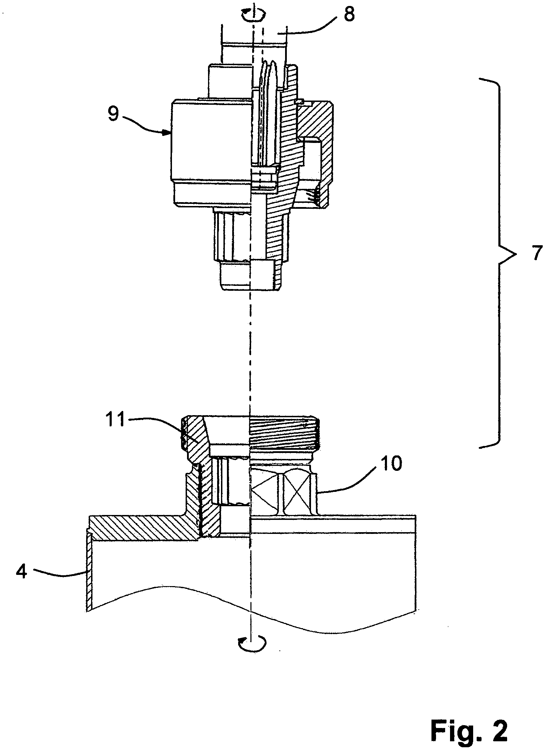

Fig. 2 zeigt beispielhaft eine in der DE-102'56'043 offenbarte Verbindungsanordnung 7 zwischen der Antriebswelle 8 einer Antriebseinheit 2 (nicht dargestellt) und einer Bohrkrone 4. Dabei ist in das konventionelle Aufnahme-Endstück 10 mit Innengewinde ein Einsteck-Stück 11 eingelötet Darüber hinaus ist eine Drehmomentaufnahme 9 vorgesehen, welche an der Antriebswelle 8 befestigt werden kann. Das Einsteck-Stück 11 ist mit der Drehmomentaufnahme 9 fest verschraubbar und bildet mit dieser eine Verbindungsanordnung 7.

Fig. 2 zeigt eine Bohrkrone 1 bekannter Art mit Zylinderrohr 2, stimseitigen Schneidkörpern 4 und einem Bohrkronenboden 3, an welchem ein Verbindungselement 5, in Form einer Anschlusshülse, mit Innengewinde 6. Diese Anschlusshülse ist formschlüssig mit dem Bohrkronenboden 3 verbunden und erlaubt das Einschrauben einer Drehmitnahme oder eines Adapters, um gemeinsam eine Aufnahmeverbindung 7 zu bilden. Auch bei dieser Ausführungsform lässt sich der Adapter nach intensivem Gebrauch nicht mehr in einfacher Weise von der Bohrkrone 1 lösen und führt zu aufwändigen und/oder teuren Servicearbeiten.

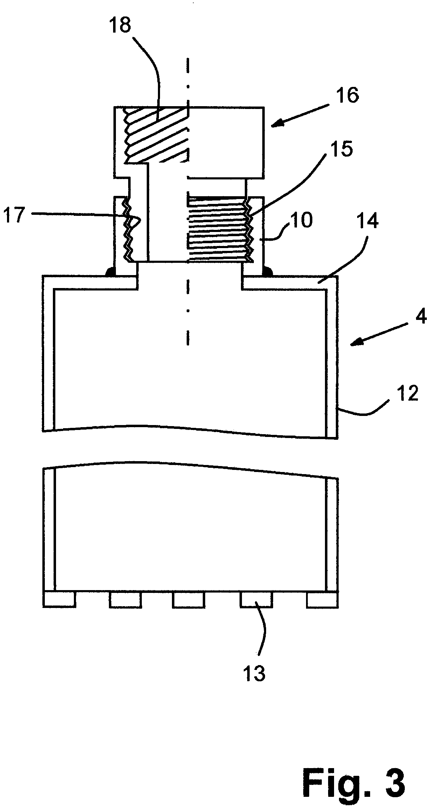

Die in Fig. 3 dargestellte Bohrkrone 4 bekannter Art umfasst ein Zylinderrohr 12 mit stirnseitig angebrachten Schneidkörpern 13 und einem Bohrkronenboden 14, an welchem ein Aufnahme-Endstück 10, in Form einer Anschlusshülse mit Innengewinde 15 stoffschlüssig angebracht, bspw. angeschweisst oder angelötet ist. Diese Schneidkörper 13 werden in der Regel aus besonderes gehärtetem Material gefertigt und sind in dem Zylinderrohr 12 eingebettet. Antriebsseitig ist dieses Zylinderrohr 12 mit einem Bohrkronenboden 14 versehen, welcher in der Regel eine stärkere Dicke als das Zylinderrohr 12 aufweist, um die hohen Dreh- und Axialkräfte besser aufnehmen zu können. Der Bohrkronenboden 14 weist ein Verbindungselement in Form eines Aufnahme-Endstücks 10 auf, welches mit einem Innengewinde 15 versehen ist. In dieses Aufnahme-Endstück 10 können weitere Verbindungselemente der Verbindungsanordnung 7 eingeschraubt werden, welche über Zwischenstücke 21 an einer Drehmitnahme 9 einer Bohrmaschine befestigt werden. Es versteht sich, dass das fest mit der Bohrkrone verbundene Verbindungselement 10 im Betrieb regelmässig verschraubt und wieder gelöst werden muss. Es versteht sich auch, dass sich diese Schraubverbindung bei den extrem hohen Quer-, Dreh- und Axialkräften verformt und dieser Arbeitsgang (Verschrauben und Lösen) unerwünscht mühsam und langwierig ist.

In einer bevorzugten Ausführungsform der vorliegenden Erfindung ist das Innengewinde 15 dieses Verbindungs-Endstücks 10 mehrgängig und läuft in Richtung der Schneidkörper 13 konisch zusammen, d.h. bildet einen vorgegebenen Konuswinkel a. Im Folgenden soll unter dem Konuswinkel a der doppelte Winkel zwischen der Drehachse und einer Tangente an das Gewinde verstanden werden. Diese konische Ausbildung des Innengewindes führt dazu, dass beim Zusammenführen und Lösen der jeweiligen erfindungsgemässen Verbindungselemente der vorliegenden Verbindungsanordnung 7, die einander komplementär zugeordneten Gewindegänge sich rasch voneinander beabstanden, d.h. keine nennenswerte Reibung mehr zwischen den einzelnen Gewindegängen entsteht und sich die jeweiligen Verbindungselemente der Verbindungsanordnung 7 sehr leicht zusammenschrauben, resp. lösen lassen. Dank der mehrgängigen Gewinde lassen sich die jeweiligen Verbindungselemente der Verbindungsanordnung 7 zusätzlich viel rascher zusammenfügen, resp. lösen. Wo mit einem konventionellen Gewinde bspw. sechszehn Umdrehungen auszuführen sind um die Verbindung zu lösen, sind dazu mit bspw. einem viergängigen Gewinde lediglich vier Umdrehungen erforderlich.

Fig. 3 zeigt ein erstes Verbindungselement in Form eines Adapterstücks 16. Dieses weist einerseits ein gebräuchliches UNC-Aussengewinde 17 auf um in ein heute handelsübliches Aufnahme-Endstück 10 einer Bohrkrone 4 eingeschraubt werden zu können. Erfindungsgemäss weist dieses Adapterstück 16 jedoch antriebsseitig ein zur Werkstückseite konisch zusammenlaufendes und mehrgängiges Innengewinde 18 auf, welches mit einem weiteren Verbindungselement der Verbindungsanordnung 7 in erfinderischer Weise zusammenwirkt.

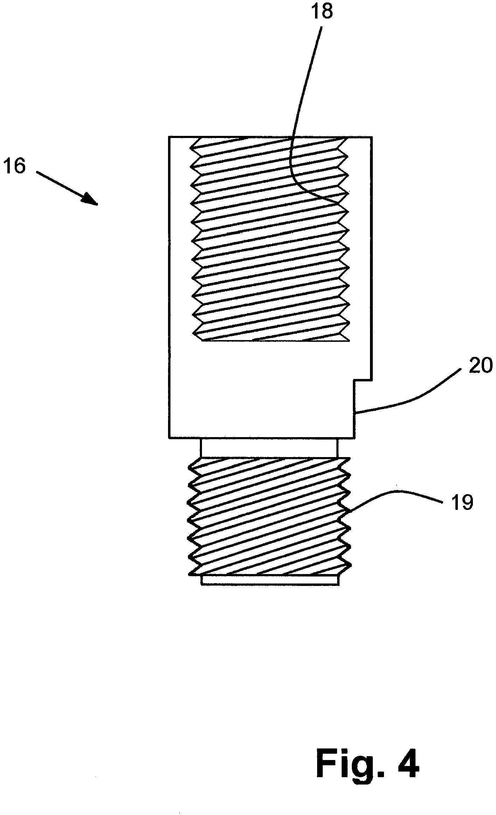

In einer bevorzugten Ausführungsform der vorliegenden Erfindung ist, wie in Fig. 4 dargestellt, das als Adapterstück 16 ausgebildete Verbindungselement der erfindungsgemässen Aufnahmeverbindung 7 derart gestaltet, dass es sich einerseits mit seinem werkstückseitigen Aussengewinde in ein konisch zusammenlaufendes und mehrgängiges Innengewinde einer modernen Bohrkrone einschrauben lässt und antriebsseitig als Anschlusshülse mit einem konisch zusammenlaufenden und mehrgängigen Innengewinde 18 ausgebildet ist. Beide Gewinde 18, 19 sind erfindungsgemäss mehrgängig und laufen konisch zusammen, resp. auseinander um mit den jeweiligen Gegenstücken eine schnell montierbare/demontierbare Schraubverbindung zu bilden. Es versteht sich, dass der Fachmann diesen Adapter 16 so gestalten kann, wie es für die verwendeten Verbindungselemente erforderlich ist. Insbesondere kann dieser Adapter auch mit zwei unterschiedlichen Innen- und/oder Aussengewinden versehen sein, um an bestehende Bohrkronen und/oder Verbindungselemente der Verbindungsanordnung angeschraubt werden zu können. Ebenso kann die Aussenseite des jeweiligen Verbindungselementes für die Verschraubung oder Lösung als mehrkantige Anschlusshülse mit mehreren Facetten oder als zylindrische Anschlusshülse mit einer einzelnen Facette 20 ausgebildet sein.

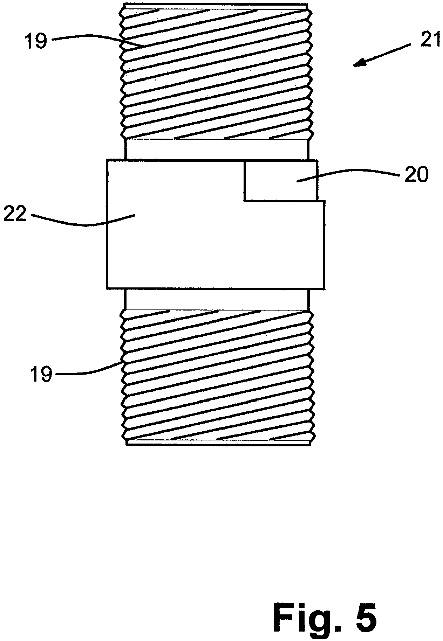

Das in Fig. 5 dargestellte Zwischenstück 21weist sowohl antriebsseitig als auch werkstückseitig ein mehrgängiges und nach aussen konisch zusammenlaufendes Aussengewinde 19 auf. Zur einfachen Handhabung und Drehung dieses Zwischenstücks 21 ist der Mittelteil 22 desselben in bekannter Weise aussen mit einer äusseren Facette 20 versehen. Im Innern wird dieses Zwischenstück 21 von einer Bohrung (nicht dargestellt) vollständig durchlaufen, insbesondere um ein allfälliges Fangelement passieren zu lassen.

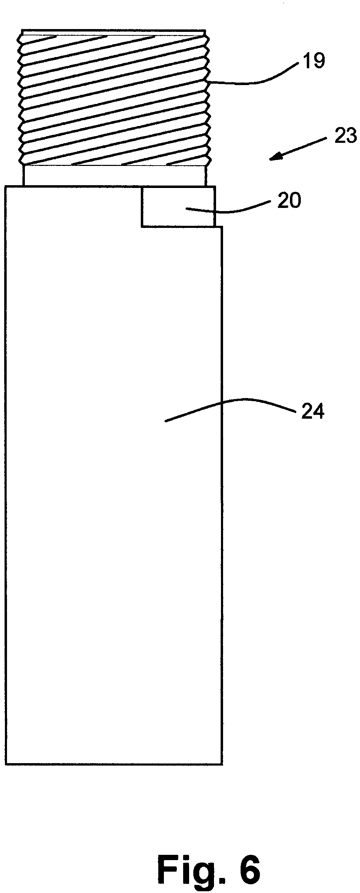

Das in Fig. 6 dargestellte Verlängerungsstück 23 weist antriebsseitig ein mehrgängiges und konisch zusammenlaufendes Aussengewinde 19 auf. Sein werkstückseitiges Verlängerungsteil 24 weist werkstückseitig ein mehrgängiges und konisch zusammenlaufendes Innengewinde 18 auf, welches sich mit jedem Aussengewinde der Verbindungselemente der erfindungsgemässen Verbindungsanordnung verschrauben lässt. Auch bei diesem Verbindungselement ist eine durchgängige Bohrung vorgesehen, insbesondere um allfällige Fangelemente passieren zu lassen.

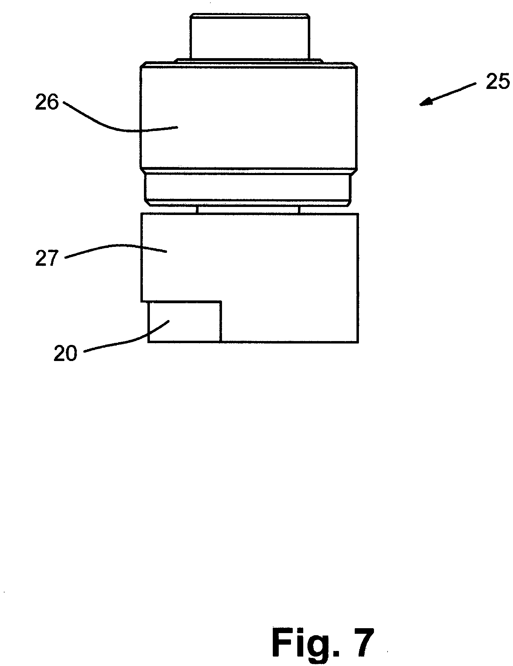

Die in Fig. 7 dargestellte Drehmitnahme 25 umfasst antriebsseitig ein Fixierungsteil 26 für die lösbare Fixierung mit einer Antriebswelle (nicht dargestellt) der Antriebseinheit 2 und werkstückseitig ein damit fest verbundenes Schraubteil 27 für die Verbindung mit einem mehrgängigen und konisch zusammenlaufenden Aussengewinde19 eines der Verbindungselemente der erfindungsgemässen Verbindungsanordnung 7.

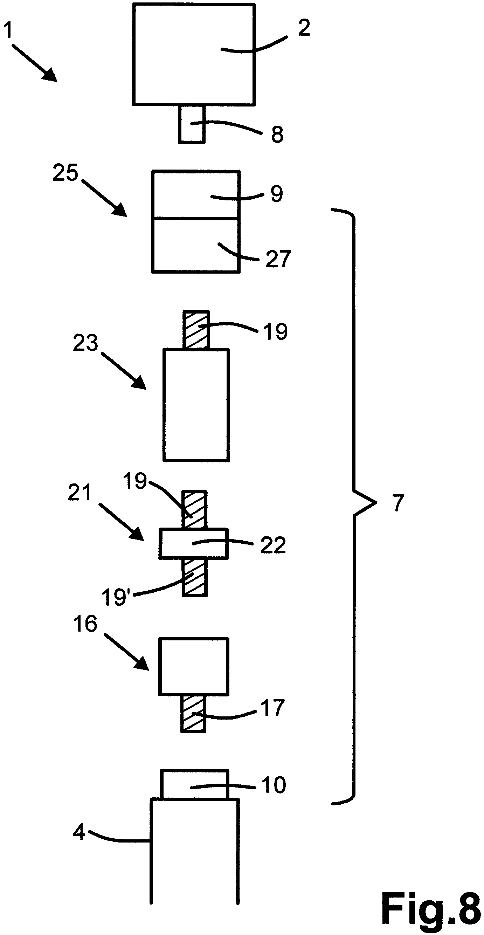

Fig. 8 soll beispielhaft eine Zusammenstellung einer Verbindungsanordnung 7 für eine erfindungsgemässe Werkzeugaufnahme. In einer Minimalversion umfasst diese Werkzeugaufnahme lediglich eine Drehmitnahme 25 um das Drehmoment der Antriebseinheit 2 aufzunehmen und an das Werkzeug/Bohrkrone 4 weiterzugeben. Die dazugehörige Verbindungsanordnung 7 umfasst in diesem Fall lediglich ein mit der Drehmitnahme 9 fest verbundenes Schraubteil 27 mit einem mehrgängigen und konisch zusammenlaufenden Innengewinde, ein Zwischenstück 21 mit mehrgängigen und konisch zusammenlaufenden Aussengewinde 19 und ein mit der Bohrkrone 4 fest verbundenes Aufnahme-Endstück 10. Es versteht sich, dass beim Vorliegen eines konventionellen Aufnahmestücks 10 mit einem einfachen UNC-Innengewinde (nicht dargestellt) ein Adapterstück 16 mit einem konventionellen UNC-Aussengewinde 17 und einem mehrgängigen und konisch zusammenlaufenden Innengewinde (nicht dargestellt) zwischen das Aufnahmestück 10 und das Zwischenstück 11 eingesetzt ist. In besonderen Fällen (Bohrungen durch eine Gebäudedecke) wird der Vorschub vor dem Durchbruch gestoppt und wird eine Fangeinrichtung eingeschoben, um beim Lösen das Herabfallen von Werkzeugteilen und entsprechende Beschädigungen zu verhindern. Dazu wird vorzeitig ein oder mehrere Verlängerungsteile 24 in die Verbindungsanordnung 7 eingeschraubt. Bei der erfindungsgemässen Werkzeugaufnahme weist dieses Verbindungselement/Verlängerungsteil 24 ein mehrgängiges und konisch zusammenlaufendes Innengewinde und ein mehrgängiges und konisch zusammenlaufendes Aussengewinde 19 auf. Es versteht sich, dass die genannten Verbindungselemente (25, 21, 16, 10) mit durchgängigen und axial miteinander fluchtenden Bohrlöchern versehen sind, insbesondere um das Einführen einer Fangvorrichtung zu ermöglichen, aber auch um das von der Antriebseinheit 2 benötigte Drehmoment so gering wir möglich zu halten ohne die erforderliche Robustheit und Festigkeit der Verbindungsanordnung 7 zu verlieren.

Die Vorteile der vorliegenden Verbindungsanordnung sind dem Fachmann unmittelbar ersichtlich und insbesondere in der einfachen Handhabung, der Robustheit und raschen Montage/Demontage zu sehen. Insbesondere führen die mehrgängigen und konisch zusammenlaufenden Gewinde zu einem kurzen Löseweg und reduzieren die erforderliche Lösekraft. Darüber hinaus vereinfachen die konisch zusammenlaufenden Gewinde auch die schnelle und korrekten Zentrierung der zu verbindenden Verbindungselemente der Verbindungsanordnung. Die frei wählbare Kombination von in der erfindungsgemässen Verbindungsanordnung verwendeten Verbindungselement erweist sich im Betrieb als äusserst zweckmässig.

Es versteht sich, dass die einzelnen Verbindungselemente der erfindungsgemässen Verbindungsanordnung vom Fachmann in gewünschter Weise an die Forderungen der Kunden weiter gestaltet werden kann. Insbesondere können die Verbindungsteile aus rostfreien Stahl oder einem anderen, den Belastungen gewachsenen Material gefertigt sein.

### Referenzzeichen

- 1: Kernbohrsystem
- 2: Antriebseinheit
- 3: Vorschubeinrichtung
- 4: Bohrkrone
- 5: Maschinenständer
- 6: Werkstoff
- 7: Verbindungsanordnung
- 8: Antriebswelle
- 9: Drehmomentmitnahme
- 10: Aufnahme-Endstück
- 11: Einsteck-Stück
- 12: Zylinderrohr
- 13: Schneidkörper
- 14: Bohrkronenboden
- 15: einfaches UNC-Innengewinde
- 16: Adapterstück
- 17: einfaches UNC-Aussengewinde
- 18: mehrgängiges und konisch zusammenlaufendes Innengewinde
- 19: mehrgängiges und konisch zusammenlaufendes Aussengewinde
- 20: Facette
- 21: Zwischenstück
- 22: Mittelteil
- 23: Verlängerungsstück
- 24: Verlängerungsteil
- 25: Drehmitnahme
- 26: Fixierungsteil
- 27: Schraubteil

## Patentansprüche

1. Werkzeugaufnahme mit einer Verbindungsanordnung (7) zur raschen und sicheren Montage/Demontage einer Bohrkrone (4) **dadurch gekennzeichnet, dass** die Verbindungsanordnung (7) mindestens ein Verbindungselement (10,16, 21, 23, 27) mit mindestens einem mehrgängigen und konisch zusammenlaufenden Innen- (18) und/oder Aussengewinde (19) aufweist, welches mit einem weiteren Verbindungselement (10, 16, 21, 23, 27) mit passendem Gegengewinde zusammenwirkt und eine mehrgängige und konisch zusammenlaufende Schraubverbindung bildet.

2. Werkzeugaufnahme nach Anspruch 1, **dadurch gekennzeichnet, dass** das mehrgängige und konisch zusammenlaufende Innen- (18) und/oder Aussengewinde (19) eine Gewindesteigung von einem Vielfachen eines einfachen UNC-Gewindes aufweist.

3. Werkzeugaufnahme nach Anspruch 2, **dadurch gekennzeichnet, dass** das mehrgängige und konisch zusammenlaufende Innen- (18) und/oder Aussengewinde (19) viergängig ist.

4. Werkzeugaufnahme nach Anspruch 3, **dadurch gekennzeichnet, dass** das mehrgängige und konisch zusammenlaufende Innen- (18) und/oder Aussengewinde (19) eine Gewindesteigung von 4 x 2.309 mm pro Umdrehung, d.h. 9.236 mm, oder von 4 x 3.175 mm, d.h. 12.7 mm, aufweist

5. Werkzeugaufnahme nach einem der vorhergehenden Ansprüche **dadurch gekennzeichnet, dass** das mehrgängige und konisch zusammenlaufende Innen-(18) und/oder Aussengewinde (19) einen Konuswinkel α von mehr als 0.5° aufweist, insbesondere einen solchen von 1° bis 10° und vorzugsweise einen solchen von 5°.

6. Werkzeugaufnahme nach einem der vorgehenden Ansprüche 1 bis 5, **dadurch gekennzeichnet, dass** die Bohrkrone (4) mit einem Aufnahme-Endstück (10) verbunden ist, welches ein mehrgängiges und konisch zusammenlaufendes Innengewinde (18) aufweist.

7. Werkzeugaufnahme nach Anspruch 6, **dadurch gekennzeichnet, dass** das Aufnahme-Endstück (10) mit der Bohrkrone (4) stoffschlüssig verbunden, d.h. verschweisst oder verlötet ist.

8. Werkzeugaufnahme nach einem der Ansprüche 1 bis 7, **dadurch gekennzeichnet, dass** die Verbindungsanordnung (7) ein Zwischenstück (21) umfasst, welches sowohl antriebsseitig als auch werkstückseitig ein mehrgängiges und nach aussen konisch zusammenlaufendes Aussengewinde (19) aufweist.

9. Werkzeugaufnahme nach einem der Ansprüche 1 bis 8, **dadurch gekennzeichnet, dass** die Verbindungsanordnung (7) eine Drehmitnahme (25) umfasst, welche werkstückseitig ein mehrgängiges und konisch zusammenlaufendes Innengewinde aufweist.

10. Werkzeugaufnahme nach einem der Ansprüche 1 bis 9, **dadurch gekennzeichnet, dass** die Verbindungsanordnung (7) ein Verlängerungsteil (24) umfasst, welches antriebsseitig ein mehrgängiges und konisch zusammenlaufendes Aussengewinde (19) und werkstückseitig ein mehrgängiges und konisch zusammenlaufendes Innengewinde (18) aufweist.
